# EUROPEAN PATENT APPLICATION

(11) **EP 2 738 570 A1**
(43) Date of publication of application: **04.06.2014**
(21) Application number: 12275188.6
(22) Date of filing: 29.11.2012
(51) Int. Cl.: G01S 17/02, G01S 17/88

(54) **Controlling laser trackers**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method and apparatus for controlling a laser tracker (4), the method comprising: arranging the laser tracker (4) and an object under test (8) such that a path from a laser source of the laser tracker (4) to a surface of the object (8) is unobstructed; positioning, by an operator (10), an optical target (14) against a point on the surface of the object (8); issuing, by the operator (10), a voice command; detecting, by a detector, the voice command; processing, by a voice recognition module (24), the voice command to determine a control signal for controlling the laser tracker (4); and, using the control signal, controlling, by a control module (26), the laser tracker (4) such that the laser tracker (4) measures a distance between the laser tracker (4) and the optical target (14).

## Description

### FIELD OF THE INVENTION

The present invention relates to controlling laser trackers.

### BACKGROUND

Typically, a laser tracker is an instrument that may be used to accurately measure a relatively large object by determining the position of an optical target when that target is held against different points on the surface of the object.

A conventional way of using a laser tracker to take measurements of an object involves two operators. A first operator holds an optical target against the object being measured, whilst a second operator operates a control module for the laser tracker. In operation, the first operator will move the target to a point on the surface of the object, and then instruct (e.g. vocally) the second operator to control the laser tracker (using the control module) to take a measurement.

A further conventional way of using a laser tracker to take measurements of an object involves a single operator using a hand-held remote control to trigger the laser tracker to take measurements. In one hand, the operator holds the target against the object being measured. In their other hand, the operator operates a remote control for the laser tracker. In operation, the operator will move the target to a point on the surface of the object, and then, e.g. by pressing a button on the remote control, control the laser tracker to take a measurement.

### SUMMARY OF THE INVENTION

The present inventors have realised that, when two operators operate a laser tracker, measurement errors resulting from miscommunications or misunderstandings between those two operators may occur, particularly when the laser tracker is being operated in a noisy environment.

The present inventors have realised that, when an operator operates a laser tracker using a remote control, the operator tends to be unable to hold (e.g. hold onto), using their hands, anything other than the optical target and the remote control. The present inventors have realised this may be dangerous, particularly when the operator is working at a relatively high distance above the ground.

In a first aspect, the present invention provides a method of controlling a laser tracker, the method comprising: arranging the laser tracker and/or an object under test such that a path from a laser source of the laser tracker to a surface of the object is unobstructed; positioning, by an operator, an optical target against a point on the surface of the object; issuing, by the operator, a voice command; detecting, by a detector, the voice command; processing, by a voice recognition module operatively coupled to the detector, the voice command to determine a control signal for controlling the laser tracker; and using the control signal, controlling, by a control module operatively coupled to the voice recognition module and the laser tracker, the laser tracker such that the laser tracker measures a distance between the laser tracker and the optical target.

The method may further comprise, thereafter, performing, one or more times, the method steps (i) to (v), wherein step (i) comprises moving, by the operator, the optical target to a different point on the surface of the object, step (ii) comprises issuing, by the operator, a further voice command, step (iii) comprises detecting, by the detector, the further voice command, step (iv) comprises processing, by the voice recognition module, the further voice command to determine a further control signal for controlling the laser tracker, and step (v) comprises, using the control signal, controlling, by the control module, the laser tracker such that the laser tracker measures a distance between the laser tracker and the optical target.

The voice command and each of the further voice commands may be the same voice command, i.e. have the same content.

The method may further comprise, using the plurality of measurements taken by the laser tracker, determining, by a model determination module operatively coupled to the laser tracker, a digital model of the surface of the object.

The method may further comprise providing, for use by a comparison module operatively to the model determination module, a digital design model for the object, and comparing, by the comparison module, the digital model of the surface of the object and the digital design model for the object so as to determine a deviation of the object from a design of the object.

The method may further comprise wirelessly transmitting, by a transmitter that is operatively coupled to the detector, to a receiver that is operatively coupled to the voice recognition module, a signal corresponding to the voice command.

The detector may be a microphone that is part of a (e.g. "hands-free") headset. The headset may be being worn by the operator.

The transmitter may also be part of the headset.

The method may further comprise, thereafter, generating, by a message generation module, a message; and playing, as an audible message, for consumption by the operator, using a speaker that is operatively connected to the message generation module, the generated message.

The message may indicate that the measurement of the distance between the laser tracker and the optical target has been performed.

The speaker may be part of a headset that is being worn by the operator.

The voice recognition module and the control module may form part of a computer, the computer being remote from the laser tracker and the operator.

In a further aspect, the present invention provides apparatus for controlling a laser tracker, the apparatus comprising: a detector configured to detect a voice command issued by an operator; a voice recognition module operatively coupled to the detector and configured to process the voice command to determine a control signal for controlling the laser tracker; and a control module operatively coupled to the voice recognition module and configured to, using the control signal, control the laser tracker such that the laser tracker measures a distance between the laser tracker and an optical target that is being positioned, by the operator, against a point on a surface of an object.

In a further aspect, the present invention provides a program or plurality of programs arranged such that when executed by a computer system or one or more processors it/they cause the computer system or the one or more processors to operate in accordance with a previous aspect.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of an example system in which an embodiment of a method of controlling a laser tracker is implemented;
Figure 2 is a schematic illustration (not to scale) of a computer; and
Figure 3 is a process flow chart showing certain steps of a process in which the laser tracker is controlled.

### DETAILED DESCRIPTION

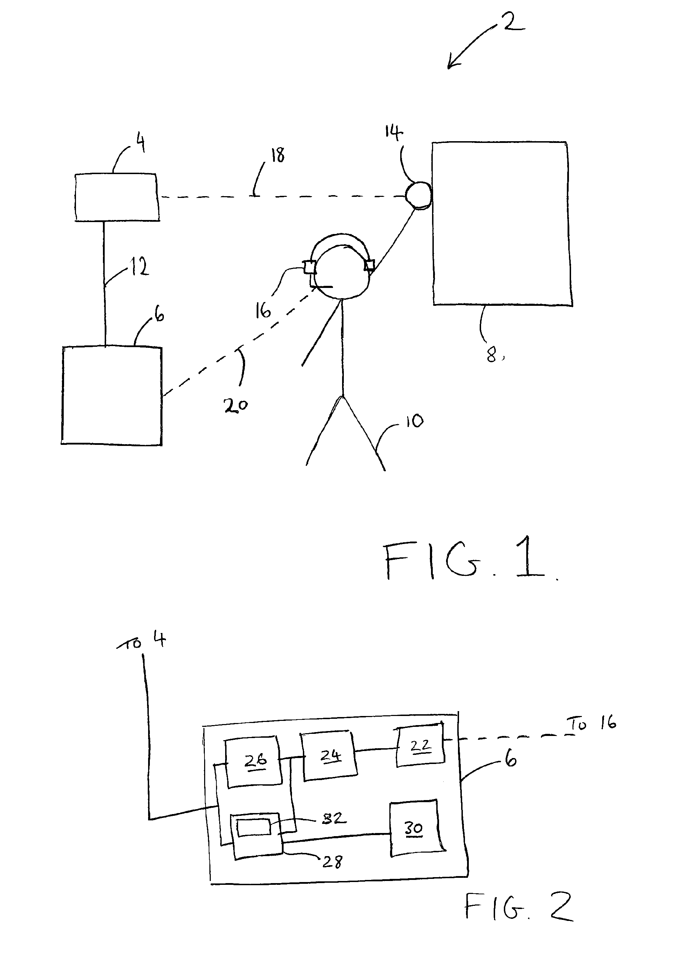

Figure 1 is a schematic illustration (not to scale) of an example system 2 in which an embodiment of a method of controlling a laser tracker is implemented.

The system 2 comprises a laser tracker 4, a computer 6, an object that is to be inspected using the laser tracker 4 (hereinafter referred to as "the object" and indicated in Figure 1 by the reference numeral 8), and a human operator 10.

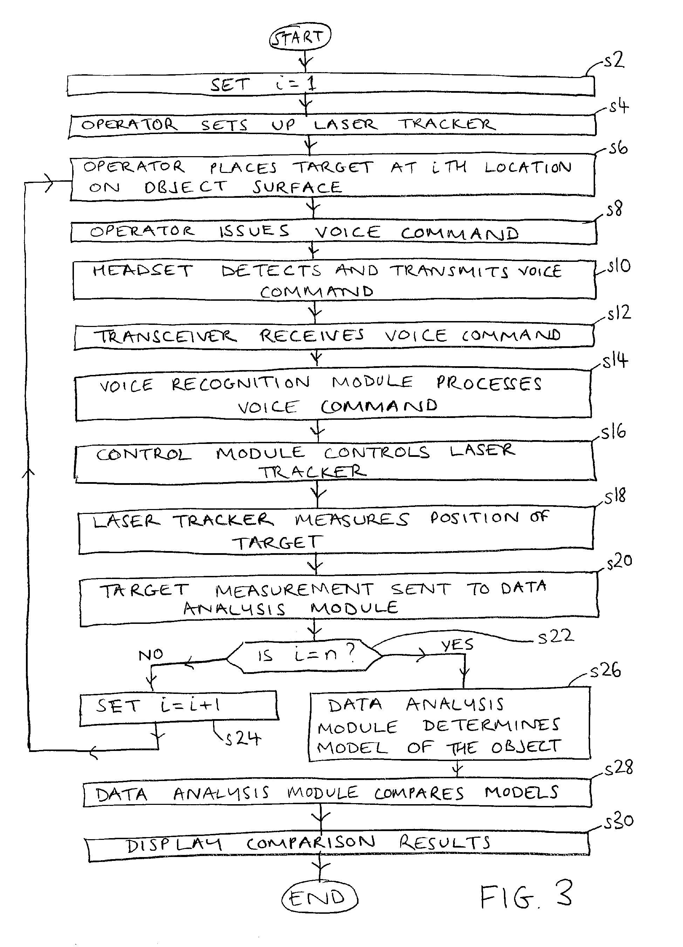

In this embodiment, the laser tracker 4 is a Leica(TM) Absolute Tracker AT901 laser tracker. However, in other embodiments, the laser tracker 4 is a different type of laser tracker. The laser tracker 4 is connected to the computer 6 via a connection 12. The connection 12 may be a wired or wireless communication link. The connection between the laser tracker 4 and the computer 6 is such that information may be sent from the computer 6 to the laser tracker 4 and *vice versa.* For example, as described in more detail later below with reference to Figure 3, a control signal may be sent from the computer 6 to the laser tracker 4. Also for example, measurement information may be sent from the laser tracker 4 to the computer 6.

The computer 6 is described in more detail later below with reference to Figure 2.

In this embodiment, the object 8 is any appropriate object that the laser tracker 4 may be used to inspect. For example, the object 8 may be an aircraft part or component. As described in more detail later below with reference to Figure 3, the object 8 is to be inspected to determine a deviation between the actual object 8 and a design model of the object. In other words, the inspection of the object 8 is to be performed to compare the actual object 8 with a digital design model of the object.

In the example system 2, the laser tracker 4 and the object 8 are arranged such that the laser tracker 4 has an unobstructed view of the object 8 such that a laser beam 18 emitted by the laser tracker 4 (e.g. form a laser source which may form part of the laser tracker 4) may be incident upon the object 8 (or a "target" 14 held against a surface of the object 8).

In this embodiment, there is a single human operator 10. The human operator 10 is an operator of the laser tracker 4 and the computer 6. The human operator 10 is equipped with the target 14 and a headset 16.

In this embodiment, the target 14 is a "retroreflective" target, i.e. a target that is able to reflect the laser beam 18 back in the same direction it came from (i.e. in use, back to the laser tracker 4). The target 8 may, for example, be a spherically mounted retroreflector (SMR). As described in more detail later below with reference to Figure 3, in use, the operator 10 places the target 14 against the object 8 and, when the target 14 is at a certain selected point on the surface of the object 8, triggers the laser tracker 4 to take measurements of the distance between the laser tracker 4 and the target 14. In this embodiment, such measurements are made by the laser tracker 4 emitting the laser beam 18 onto the target 14 and measuring the reflected laser beam 18.

In this embodiment, the headset 16 is a Plantronics(TM) C60-USB headset. However, in other embodiments, the headset is a different type of headset. The headset 16 is worn by the operator 10 in a standard fashion. In this embodiment, the headset 16 comprises a microphone and a transceiver (e.g. a Bluetooth(TM) transceiver) operatively connected to the microphone.

The microphone of the headset 16 is configured to detect voice commands issued (i.e. spoken) by the operator 10. Preferably, the microphone is a noise cancelling microphone. This advantageously tends to provide that the headset 16 may be used (and the method of controlling the laser tracker 4 may be implemented) in noisy environments, such as a factory floor.

The transceiver of the headset 16 is configured to transmit (in any appropriate format) data corresponding to the voice commands detected by the microphone, from the headset 16, for use by the computer 6. In this embodiment, this transmission of data corresponding to the operator's voice commands from the headset 16 to the computer 6 is via a wireless communication link 20.

In this embodiment, the headset 16 has a range of at least 100m (i.e. the headset 16 is capable of transmitting information to, and receiving information from, the computer 6 over a physical distance of at least 100m). However, in other embodiments, the headset 16 may have a different range.

In this embodiment, the headset 16 has a battery life of at least 8 hours. However, in other embodiments, the headset 16 may have a different battery life.

The headset 16 may further comprise one or more speakers (e.g. headphone speakers) that may be operatively connected to the transceiver of the headset 16. The transceiver of the headset 16 may be further configured to receive (e.g. from the computer 6 via the wireless communications link 20) a signal that may be played (e.g. audibly), using the one or more speakers of the headset 16, to the operator 10.

Figure 2 is a schematic illustration (not to scale) of the computer 6.

In this embodiment, the computer 6 comprises a transceiver 22, a voice recognition module 24, a control module 26, a data analysis module 28 and a display 30.

The transceiver 22 is configured to receive information from the headset 16 via the wireless communication link 20. The transceiver 22 may also be configured to send information to the headset 16 via the wireless communication link 20.

In addition to being connected (via the wireless communication link 20) to the headset 16, the transceiver 22 is connected to the voice recognition module 24 such that information may be sent between the transceiver 22 and the voice recognition module 24.

The voice recognition module 24 may be configured to process information received from the transceiver 22. For example, the voice recognition module 24 may be configured to process the data corresponding to the operator's voice commands that are received by the transceiver 22 from the headset 16. This processing of the data corresponding to the operator's voice commands may be performed such that the voice recognition module 24 determines one or more keyboard shortcuts, keystroke commands, etc. (or a different type of command that is usable or understandable by the control module 26) that correspond or relate to the voice commands issued by the operator 10.

In other words, the voice recognition module 24 may recognise an input voice command and, in response, output a keystroke command (or other command usable by the control module 26) that corresponds to that input voice command.

The voice recognition module 24 may implement Voice Recognition (VR) software and/or tools (e.g. E-speaking VR Software, VR Commander, etc.) to process the received data corresponding to the operator's voice commands.

In addition to being connected to the transceiver 22, the voice recognition module 24 is connected to the control module 26 such that information (e.g. determined keystroke commands) may be sent between the voice recognition module 24 and the control module 26. In this embodiment, the voice recognition module 24 is also connected to the data analysis module 28 such that information (e.g. determined keystroke commands) may be sent between the voice recognition module 24 and the data analysis module 28.

The control module 26 is configured to process information received by it (i.e. from the voice recognition module 24) and to generate a control signal for controlling the laser tracker 4.

In addition to being connected to the voice recognition module 24, the control module 26 is connected to the laser tracker 4 such that information (e.g. the generated control signal) may be sent from the control module 26 to the laser tracker 4.

The data analysis module 28 is connected to the laser tracker 4 such that information (e.g. measurements of the position of the target 14 taken by the laser tracker 4) may be sent from the laser tracker 4 to the data analysis module 28.

The data analysis module 28 is configured to process information received by it (i.e. from the laser tracker 4). In this embodiment, the data analysis module 28 comprises a digital design model for the object 8 (hereinafter referred to as the "object model" and indicated in Figure 2 by the reference numeral 32). The processing of the information received by the data analysis module 28 may comprise the data analysis module 28 determining a model of the actual object 8, and comparing that model of the actual object 8 to the object model 32. This may, for example, be performed to determine deviations of the actual object 8 from the object model 32.

In this embodiment, the data analysis module 28 is connected to the display 30 such that the results of the data processing performed by the data analysis module 28 may be displayed (e.g. to the operator 10) on the display 30.

In this embodiment, the data analysis module 28 is connected to the voice recognition module 24 such that the processing of data performed by the data analysis module 28, and/or the display of the data processing results, may be controlled by the voice recognition module 28. In other words, the data analysis module 28 is connected to the voice recognition module 24 such that the processing of data performed by the data analysis module 28, and/or the display of the data processing results, may be performed in accordance with voice commands issued by the operator 10.

Apparatus, including the computer 6, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

Figure 3 is a process flow chart showing certain steps of a process in which the laser tracker 4 is controlled. In this embodiment, the laser tracker 4 is to be controlled so as to take respective measurements of the target 14 when the target 14 is at a plurality of different respective points on the surface of the object 8. In particular, the laser tracker 4 is to be controlled so as to take *n* different measurements. The number *n* of different measurements may be any appropriate number.

At step s2, an index *i* is set to be equal to 1 (i.e. *i* = 1)

At step s4, the operator 10 sets up the laser tracker 4 such that the laser tracker 4 has an unobstructed view of the object 8, i.e. such that the laser tracker 4 may emit the laser beam 18 onto a surface of the object 8 (or the target 14 placed thereon), without the laser beam 18 being obstructed (i.e. at least partially stopped, deflected, or reflected, etc.) by an intermediate body.

At step s6, the operator 10 places the target 14 onto a surface of the object 8. The target 14 is placed onto the surface of the object 8 such that the target is in contact with an *i*th point on the surface of the object 8.

Initially, the target 14 may be moved (e.g. from a location proximate to the laser tracker 4) onto the object 8 relatively slowly and smoothly. This tends to facilitate the laser tracker 4 following the movement of the target 14 onto the object.

At step s8, the operator 10 issues a voice command.

The voice command issued by the operator 10 may be any appropriate voice command or instruction that may be used to control the laser tracker 4 so as to take a measurement of the distance between it and the target 14. For example, the operator 10 may say the word "go". Preferably, the voice command for triggering the laser tracker 4 to perform a measurement is a relatively succinct voice command.

At step s10, the microphone of the headset 16 detects the voice command issued by the operator 10, and the transceiver of the headset 16 transmits, via the wireless communication link 20, to the transceiver 22 of the computer 6, digital data corresponding to the issued voice command.

At step s12, the transceiver 22 of the computer 6 receives the data corresponding to the voice command (that was issued by the operator 10 step s8). The data received by the transceiver 22 is sent from the transceiver 22 to the voice recognition module 24.

At step s14, the voice recognition module 24 processes the received data.

In this embodiment, the voice recognition module 24 processes the data corresponding to the operator's voice commands to determine one or more keyboard shortcuts, keystroke commands, or other type of command that is usable or understandable by the control module 26, that correspond to the voice command issued by the operator 10.

In other words, voice recognition module 24 processes the data corresponding to the issued voice command (i.e. the voice command instructing the laser tracker 4 to take a measurement of the distance between it and the target 14) so as to determine a corresponding command that is recognisable by the control module 26 (i.e. a command instructing control module 26 to control the laser tracker 4 to take a measurement of the distance between it and the target 14).

In other words, the voice recognition module 24 recognises the voice command issued by the operator at step s8, and, using that voice command, generates a command for the control module 6 to control the laser tracker 4 to perform the task corresponding to the issued voice command.

The voice recognition module 24 may send the generated command for the control module 26 (hereinafter referred to as the control module command) to the control module 26.

At step s16, using the control module command generated (or determined) by the voice recognition module 24, the control module 26 controls the laser tracker 4 such that the laser tracker 4 takes a measurement of the distance between it and the target 14. In other words, in this embodiment, the control module 26 controls the laser tracker 4 such that the laser tracker performs the task corresponding to the control module command (i.e. the task corresponding to the voice command issued by the operator 10 at step s8).

In this embodiment, the control module 26 controls the laser tracker 4 by sending, to the laser tracker 4, an appropriate control signal via the connection 12.

At step s18, the laser tracker 4 measures the distance between itself and the target 14. In other words, the laser tracker 4 measures the distance between the laser tracker 4 and the target 14 when the target 14 is in contact with the *i*th point on the surface of the object 8.

In particular, in this embodiment, the laser tracker 4 emits a laser beam 18 onto the target 14. The target 14 reflects the laser beam 18 back to the laser tracker 4. The laser tracker 4 receives the reflected laser beam 18. Using the time taken for the laser beam 18 to travel from the laser tracker 4 to the target 14 and back, the laser tracker 4 determines the distance between the laser tracker 4 and the target 14.

In other embodiments, the distance between the laser tracker 4 and the target 14 may be determined by a different entity in the system 2. For example, in other embodiments, the laser tracker 4 may measure the time between the laser beam 18 being emitted, and the reflected laser beam 18 being received. This time measurement may then be sent to a different entity within the system 2 (e.g. the data analysis module 28) which may then determine the distance between the laser tracker 4 and the target 14.

At step s20, the measurement of distance between the laser tracker 4 and the target 14 when the target 14 is in contact with the *i*th point on the surface of the object 8 is sent from the laser tracker 4 to the data analysis module 28.

At step s22 it is determined whether or not the index *i* is equal to *n,* i.e. it is determined whether or not *i = n.*

If at step s22, it is determined that *i ≠ n,* the method of Figure 3 proceeds to step s24.

However, if at step s22, it is determined that *i* = *n,* the method of Figure 3 proceeds to step s26.

At step s24, the index i is incremented by 1. In other words, *i* is set to be *i*+1, i.e. *i = i* + 1.

After step s24, the method of Figure 3 proceeds back to step s6 at which point the operator 10 moves the target 14 to be in contact with the (*i*+1)th point on the surface of the object 8. In this embodiment, the (*i*+1)th point on the surface of the object 8 is a different point on the surface of the object 8 to each of the points at which the target 14 has previously been placed. In other words, the (*i*+1)th point on the surface of the object 8 is a different point on the surface of the object 8 to each of the previous 1, ..., *i* points on the surface of the object 8.

Thus, the laser tracker 4 measures a plurality of different points on the surface of the object 8.

At step s26, the data analysis module 28 processes the received plurality of measured distances to determine a model of the object 8.

In other words, the data analysis module 28 processes the received *n* distances (i.e. the measured distances between the laser tracker 4 and each of the *n* different points on the surface of the actual object 8). This is done to determine a digital model of the surface of the actual object 8.

In this embodiment, the determination of the model of the actual object 8 uses a known distance between the point on the target 14 from which the laser beam 18 is reflected during the measurement by the laser tracker 4, and the point on the target 14 that is in contact with the object 8 when that measurement is performed.

In this embodiment, the processing performed by the data analysis module 28 at step s26 may be performed in response to, or in accordance with, one or more further voice commands issued by the operator 10 and received (and processed) by the voice recognition module 24. For example, the operator 10 may say the word "end" to indicate that no more measurements are to be performed and that the model of the object 8 may be determined. Alternatively, the operator 10 may use the phrase "determine model" to instruct the data analysis module 28 to determine the model of the object 8. Preferably, the voice command for controlling the data analysis module 28 is a relatively succinct voice command.

At step s28, the data analysis module 28 compares the model of the actual object 8 (determined at step s28) to the stored object model 32. This comparison may, for example, be performed to determine any deviation of the actual object 8 from the design model for that object 8 (i.e. from the object model 32). Any appropriate comparison method may be used.

In this embodiment, the processing performed by the data analysis module 28 at step s28 may be performed in response to, or in accordance with, one or more further voice commands issued by the operator 10 and received (and processed) by the voice recognition module 24. Preferably, the voice commands for controlling the data analysis module 28 are relatively succinct voice commands.

At step s30, the results of the comparison performed by the data analysis module 28 are displayed, e.g. to the operator 10, on the display 30.

In this embodiment, the display of the results may be performed in response to, or in accordance with, one or more further voice commands issued by the operator 10 and received (and processed) by the voice recognition module 24. For example, the operator 10 may say the word "display" to indicate that the output of the data analysis module 28 is to be displayed on the display 30. Preferably, the voice commands for controlling the display of results are relatively succinct voice commands.

Thus, a process in which the laser tracker 4 is controlled is provided.

An advantage provided by the above described system and methods is that a laser tracker may be controlled, in a relatively safe way, by a single operator.

A conventional way of using a laser tracker to take measurements of an object involves two operators. A first operator holds the target against the object being measured. A second operator operates a control module for the laser tracker. In operation, the first operator will move the target to a point on the surface of the object, and then tell (e.g. vocally) the second operator to control the laser tracker (using the control module) to take a measurement.

The above described systems and methods advantageously tend to remove a need for two operators, thereby reducing labour costs. Efficiency tends to be increased. Furthermore, risks of "human errors" being made tend to be reduced. Furthermore, the chances of miscommunications or misunderstandings between two different human operators are eliminated.

A further conventional way of using a laser tracker to take measurements of an object involves a single operator using a hand-held remote control to trigger laser tracker measurements. In one hand, the operator holds the target against the object being measured. In their other hand, the operator operates a remote control for the laser tracker. In operation, the operator will move the target to a point on the surface of the object, and then, e.g. by pressing a button on the remote control, control the laser tracker to take a measurement.

The above described systems and methods advantageously tend to remove a need for a hand-held remote control for the laser tracker and give the operator a free hand. This tends to be particularly important when the operator is working at a relatively high distance above the ground as it allows the operator to hold on to something (e.g. a safety bar) with their free hand, which conventionally the operator may be unable to do. Furthermore, the above described systems and methods advantageously give an operator increased manoeuvrability and awareness of their surroundings. This tends to reduce the risks of injury or accident.

Remote controls (as are used conventionally) for controlling laser trackers may be wired, i.e. there may be a wire connection between the remote control and the laser tracker or a control module. The above described systems and methods advantageously remove the need for such trailing wires (which may, for example, be a trip hazard).

Alternatively, remote controls (as are used conventionally) for controlling laser trackers may be wireless. Use of such wireless remote controls typically requires line-of-sight between the wireless remote control and the laser tracker or a control module. This may limit use of the laser tracker as the operator may not control the laser tracker from a position in which there is no line-of-sight between the remote control and the laser tracker or control module. The above described systems and methods advantageously tend to remove this limitation.

Also, remote controls (as are used conventionally) for controlling laser trackers typically have limited functionality. For example, a remote control may be limited to turning the laser tracker on/off and/or triggering a measurement. This tends to be in contrast to the above described systems and methods which advantageously allows for a relatively large number of functions or operations to be controlled using voice commands issued by an operator.

The above described system and methods tend to be relatively cheap and easy to implement. Furthermore, advantageously it tends to be relatively easy to modify existing laser tracking systems so that they may be controlled using voice commands.

In the above embodiments, the laser tracker is used to determine a model of the actual object, which is then compared to a design model for that object. However, in other embodiments, the measurements taken using the laser tracker may be used for a different purpose. For example, the laser tracker may be used to check the alignment between two different objects, e.g. to aid in the alignment of aircraft wings during the assembly of an aircraft.

In the above embodiments, voice commands issued by the user are "translated" into control signals for the laser tracker by a voice recognition module. In other embodiments, the voice recognition module may also be configured to generate a signal that is to be sent for playback/consumption (e.g. for audible playback on the headset) to the operator. For example, the voice recognition module may send a message to the headset that is played to the operator using the loudspeakers of the headset. This audible message may, for example, confirm to the operator that a measurements has taken place, indicate to the operator that the target should be models to a new position, indicate to the operator the status (off/on) of the laser tracker, etc.

In the above embodiments, the laser tracker measures the distance between itself and the target when the target is at a plurality of discrete different points. However, in other embodiments, the laser tracker may be configured to continuously measure the distance between itself and the target.

In the above embodiments, the components of the system are connected together as described in more detail earlier above with reference to Figures 1 and 2. However, in other embodiments, the components of the system may be connected together in a different way such that the above described functionality is provided.

## Claims

1. A method of controlling a laser tracker (4), the method comprising:
arranging the laser tracker (4) and an object under test (8) such that a path from a laser source of the laser tracker (4) to a surface of the object (8) is unobstructed;
positioning, by an operator (10), an optical target (14) against a point on the surface of the object (8);
issuing, by the operator (10), a voice command;
detecting, by a detector, the voice command;
processing, by a voice recognition module (24) operatively coupled to the detector, the voice command to determine a control signal for controlling the laser tracker (4); and
using the control signal, controlling, by a control module (26) operatively coupled to the voice recognition module (24) and the laser tracker (4), the laser tracker (4) such that the laser tracker (4) measures a distance between the laser tracker (4) and the optical target (14).

2. A method according to claim 1, wherein
the method further comprises, thereafter, performing, one or more times, the method steps (i) to (v);
step (i) comprises moving, by the operator (10), the optical target (14) to a different point on the surface of the object (8);
step (ii) comprises issuing, by the operator (10), a further voice command;
step (iii) comprises detecting, by the detector, the further voice command;
step (iv) comprises processing, by the voice recognition module (24), the further voice command to determine a further control signal for controlling the laser tracker (4); and
step (v) comprises, using the control signal, controlling, by the control module (26), the laser tracker (4) such that the laser tracker (4) measures a distance between the laser tracker (4) and the optical target (8).

3. A method according to claim 2 wherein the voice command and each of the further voice commands have the same content.

4. A method according to any of claims 1 to 3, wherein the method further comprises, using the plurality of measurements taken by the laser tracker (4), determining, by a model determination module (28) operatively coupled to the laser tracker (4), a digital model of the surface of the object (8).

5. A method according to claim 4, the method further comprising:
providing, for use by a comparison module (28) operatively to the model determination module (28), a digital design model (32) for the object (8); and
comparing, by the comparison module (28), the digital model of the surface of the object (8) and the digital design model (32) for the object (8) so as to determine a deviation of the object (8) from a design of the object (8).

6. A method according to any of claims 1 to 5, the method further comprises wirelessly transmitting, by a transmitter that is operatively coupled to the detector, to a receiver (22) that is operatively coupled to the voice recognition module (24), a signal corresponding to the voice command.

7. A method according to any of claims 1 to 6, wherein the detector is a microphone, the microphone being part of a headset (16), the headset (16) being worn by the operator (10).

8. A method according to claim 7 when dependent on claim 6, wherein the transmitter is part of the headset (16).

9. A method according to any of claims 1 to 8, the method further comprising, thereafter:
generating, by a message generation module, a message; and
playing, as an audible message, for consumption by the operator (10), using a speaker that is operatively connected to the message generation module, the generated message.

10. A method according to claim 9, wherein the message indicates that the measurement of the distance between the laser tracker (4) and the optical target (14) has been performed.

11. A method according to claim 9 or 10, wherein the speaker is part of a headset (16), the headset (16) being worn by the operator (10).

12. A method according to any of claims 1 to 8, wherein the voice recognition module (24) and the control module (26) form part of a computer (6), the computer (6) being remote from the laser tracker (4) and the operator (10).

13. Apparatus for controlling a laser tracker (4), the apparatus comprising:
a detector configured to detect a voice command issued by an operator (10);
a voice recognition module (24) operatively coupled to the detector and configured to process the voice command to determine a control signal for controlling the laser tracker (4); and
a control module (26) operatively coupled to the voice recognition module (24) and configured to, using the control signal, control the laser tracker (4) such that the laser tracker (4) measures a distance between the laser tracker (4) and an optical target (14) that is being positioned, by the operator (10), against a point on a surface of an object (8).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.
